# EUROPÄISCHE PATENTSCHRIFT

(11) **EP 2 021 612 B1**
(45) Veröffentlichungstag und Bekanntmachung des Hinweises auf die Patenterteilung: **28.11.2018**
(21) Anmeldenummer: 07729138.3
(22) Anmeldetag: 15.05.2007
(51) Int. Cl.: F02M 26/26, F02M 26/32, F02M 26/73

(54) **ABGASRÜCKFÜHREINRICHTUNG**
EXHAUST GAS RECIRCULATION DEVICE
SYSTÈME DE RECYCLAGE DES GAZ D'ÉCHAPPEMENT

(30) Priorität: 19.05.2006 DE 102006023855
(43) Veröffentlichungstag der Anmeldung: 11.02.2009
(73) Patentinhaber: MAHLE International GmbH, 70376 Stuttgart (DE)
(72) Erfinder: GRÜNER, Andreas, 73110 Hattenhofen (DE); SENDOR, Robert, 82515 Wolfratshausen (DE); KNAUSS, Rüdiger, 71394 Kernen I. R. (DE); SCHWALK, Bernhard, 71634 Ludwigsburg (DE)
(74) Vertreter: BRP Renaud & Partner mbB Rechtsanwälte Patentanwälte Steuerberater
(86) Internationale Anmeldenummer: PCT/EP2007/054686
(87) Internationale Veröffentlichungsnummer: WO 2007/135021

(56) Entgegenhaltungen:
- EP-A- 1 270 921
- DE-A1- 10 344 217
- JP-A- 2004 257 366
- JP-A- 2006 299 942
- US-A1- 2004 107 949

## Beschreibung

Die vorliegende Erfindung betrifft einen Abgasrückführkühler für eine Abgasrückführeinrichtung für eine Brennkraftmaschine, insbesondere in einem Kraftfahrzeug, mit den Merkmalen des Oberbegriffs des Anspruchs 1. Die Erfindung betrifft außerdem eine mit einem derartigen Abgasrückführkühler ausgestattete Abgasrückführeinrichtung.

Bei Brennkraftmaschinen kommt vermehrt eine Abgasrückführung zum Einsatz, um dadurch die Emissionswerte und die Wirtschaftlichkeit der Brennkraftmaschine zu verbessern. Um dabei einen Anstieg von NOₓ-Emissionen zu vermeiden, ist es erforderlich, die rückgeführten Abgase mit Hilfe eines Abgasrückführkühlers, kurz AGR-Kühler, zu kühlen, da die NOₓ-Bildung im Verbrennungsprozess mit ansteigender Temperatur überproportional zunimmt.

Dementsprechend umfasst eine Abgasrückführeinrichtung, kurz AGR-Einrichtung, der eingangs genannten Art üblicherweise einen AGR-Kühler, der in eine Abgasrückführleitung, kurz AGR-Leitung eingebaut ist und der an einen mit einem flüssigen Kühlmittel arbeitenden Kühlkreis angeschlossen ist. Der AGR-Kühler weist hierzu ein vom Kühlmittel durchströmbares Kühlergehäuse auf, das einen Abgaseinlass, einen Abgasauslass, einen Kühlmitteleinlass und einen Kühlmittelauslass aufweist.

Ein gattungsgemäßer Abgasrückführkühler ist aus der JP 2004 257366 A bekannt. Der bekannte Abgasrückführkühler weist ein von Kühlmittel durchströmbares Kühlergehäuse auf, das zumindest einen Abgaseinlass, einen Abgasauslass, einen Kühlmitteleinlass und einen Kühlmittelauslass aufweist. Somit ist der bekannte Abgasrückführkühler an eine Abgasrückführleitung zum externen Rückführen von Abgas aus einer Abgasseite der Brennkraftmaschine in eine Frischgasseite der Brennkraftmaschine sowie an einen mit einem flüssigen Kühlmittel arbeitenden Kühlkreis anschließbar. Ferner enthält der Abgasrückführkühler in seinem Kühlergehäuse eine erste Kühlrohranordnung mit wenigstens einem den Abgaseinlass mit dem Abgasauslass verbindenden Kühlrohr und eine zweite Kühlrohranordnung mit wenigstens einem den Abgaseinlass mit dem Abgasauslass verbindenden Kühlrohr, wobei die Kühlrohranordnungen so ausgestaltet sind, dass die zweite Kühlrohranordnung einen größeren Wärmestrom zwischen Abgas und Kühlmittel ermöglicht als die erste Kühlrohranordnung.

Aus der JP 2006 299942 A ist Abgasrückführkühler bekannt, bei dem im Kühlergehäuse ein zentrales Bypassrohr für Abgas angeordnet ist, das von gekühlten Kühlrohren ringförmig umgeben ist. Das Kühlergehäuse besitzt an einer Abströmseite eine erste Austrittsöffnung für Abgas und eine zweite Austrittsöffnung für Abgas, die in der Umfangsrichtung nebeneinander angeordnet sind. Ferner ist an der Abströmseite ein Steuerventil angeordnet, dessen Ventilglied ein abgewinkeltes Rohrstück und einen damit verbundenen Schieber umfasst, wobei das Ventilglied zwischen einer ersten Stellung, in welcher das Rohrstück das zentrale Bypassrohr mit der ersten Auslassöffnung verbindet, während die zweite Auslassöffnung mit den Kühlrohren verbunden ist, und einer zweiten Stellung verstellbar ist, in welcher das Rohrstück das zentrale Bypassrohr mit der zweiten Auslassöffnung verbindet, während der Schieber die erste Auslassöffnung verschließt.

Weitere Abgasrückführkühler sind aus der EP 1 270 921 A2 und aus der US 2004/0107949 A1 bekannt.

Aus der WO 96/30 635 A1 ist eine AGR-Einrichtung bekannt, die sich dadurch auszeichnet, dass sie einen, den AGR-Kühler extern umgehenden Bypass aufweist, der mit Hilfe eines Schaltventils steuerbar ist. Mit Hilfe eines derartigen Bypasses wird die Möglichkeit geschaffen, den AGR-Kühler bei aktiviertem Bypass zu umgehen. Dies ist zum Beispiel bei einem Kaltstart der Brennkraftmaschine erwünscht, um dadurch über die Wärme der rückgeführten Abgase die Brennkraftmaschine möglichst rasch aufzuwärmen. Bei warmer Brennkraftmaschine wird der Bypass deaktiviert, so dass dann die rückgeführten Abgase den AGR-Kühler durchströmen und dabei gekühlt werden.

Aus der DE 199 62 863 A1 ist eine weitere AGR-Einrichtung mit AGR-Kühler und Bypass bekannt. Allerdings umgeht bei dieser AGR-Einrichtung der Bypass den AGR-Kühler intern. Das bedeutet, dass der Bypass innerhalb des Kühlergehäuses verläuft, jedoch gegenüber dem Kühlmittel thermisch isoliert ist.

Die vorliegende Erfindung beschäftigt sich mit dem Problem, für einen AGR-Kühler bzw. für eine AGR-Einrichtung der eingangs genannten Art eine verbesserte Ausführungsform anzugeben, die sich insbesondere durch eine erhöhte Variabilität der einstellbaren Kühlleistung des AGR-Kühlers auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, im AGR-Kühler zwei getrennt durchströmbare Kühlrohranordnungen vorzusehen, die sich durch unterschiedliche Kühlleistungen voneinander unterscheiden. Die eine oder erste Kühlrohranordnung weist eine geringere Kühlleistung auf und ermöglicht somit einen kleineren Wärmestrom zwischen Abgas und Kühlmittel. Im Unterschied dazu weist die andere oder zweite Kühlrohranordnung eine größere Kühlleistung auf und ermöglicht so einen größeren Wärmestrom zwischen Abgas und Kühlmittel. Durch diese Bauweise werden quasi zwei separate AGR-Kühler mit unterschiedlicher Kühlleistung in ein gemeinsames Gehäuse integriert, wodurch sich eine extrem kompakte Bauweise ergibt. Mit Hilfe der vorgeschlagenen Bauweise des AGR-Kühlers sind grundsätzlich drei verschiedene Durchströmungszustände realisierbar. In einem ersten Durchströmungszustand, der beispielsweise dann eingestellt wird, wenn kein Kühlbedarf oder nur ein kleiner Kühlbedarf besteht, werden die Abgase ausschließlich durch die erste Kühlrohranordnung geleitet, die den kleineren Wärmestrom ermöglicht. In einem zweiten Durchströmungszustand, der beispielsweise dann eingestellt wird, wenn ein mittlerer Kühlungsbedarf besteht, werden die Abgase ausschließlich durch die zweite Kühlrohranordnung geführt, die den größeren Wärmestrom ermöglicht. In einem dritten Durchströmungszustand, der beispielsweise zur Deckung eines großen Kühlbedarfs eingestellt wird, strömen die Abgase durch beide Kühlrohranordnungen. Dabei kann vorgesehen sein, die Aufteilung des Abgasstroms auf die beiden Kühlrohranordnungen im dritten Durchströmungszustand gestuft oder stufenlos einstellbar auszugestalten, wodurch die vom AGR-Kühler bereitgestellte Kühlleistung noch besser an den aktuellen Kühlbedarf anpassbar ist.

Zur Verbesserung der Kühlleistung für die erste Kühlrohranordnung schlägt die Erfindung vor, im Kühlergehäuse eine Trennwand anzuordnen. Gemäß einer ersten erfindungsgemäßen Lösung trennt die Trennwand im Kühlergehäuse einen Hauptkühlraum, der vom Kühlmittel durchströmbar ist und in dem das eine Kühlrohr oder die Kühlrohre der zweiten Kühlrohranordnung verläuft/verlaufen, von einem Zusatzkühlraum, in dem das eine Kühlrohr oder die Kühlrohre der ersten Kühlrohranordnung verläuft/verlaufen, wobei die Trennwand wenigstens eine Öffnung enthält, durch die der Zusatzkühlraum mit dem Hauptkühlraum kommuniziert. Gemäß einer zweiten erfindungsgemäßen Lösung umhüllt die Trennwand die erste Kühlrohranordnung oder das eine Kühlrohr oder jedes Kühlrohr der ersten Kühlrohranordnung in Umfangsrichtung, derart, dass die Trennwand einen das jeweilige Kühlrohr oder die jeweiligen Kühlrohre in Umfangsrichtung umhüllenden Zusatzkühlraum in Umfangsrichtung umschließt, wobei die Trennwand zumindest eine Öffnung enthält, durch die der Zusatzkühlraum mit einem Hauptkühlraum kommuniziert, der vom Kühlergehäuse umschlossen ist, der vom Kühlmittel durchströmbar ist und in dem das eine Kühlrohr oder die Kühlrohre der zweiten Kühlrohranordnung verläuft/verlaufen.

Bei einer Weiterbildung des AGR-Kühlers kann ein den AGR-Kühler extern umgehender Bypass vorgesehen sein, der beispielsweise bei fehlendem Kühlbedarf aktiviert ist. Alternativ kann zum Beispiel bei Brennkraftmaschinen, die aufgrund ihrer Bauweise eine vergleichsweise kurze Warmlaufphase aufweisen, auf einen derartigen Bypass verzichtet werden. Die rückgeführten Abgase können während des Warmlaufbetriebs ausschließlich durch die leistungsschwächere erste Kühlrohranordnung geleitet werden. Eine dann gegebene Verlängerung der Warmlaufphase gegenüber einer Ausführungsform mit externem Bypass oder internem, isoliertem Bypass, wird dabei in Kauf genommen.

Um die Kühlleistung beziehungsweise den Wärmestrom zwischen Abgas und Kühlmittel innerhalb der beiden Kühlrohranordnungen unterschiedlich ausgestalten zu können, werden mehrere verschiedene Maßnahmen vorgeschlagen, die kumulativ oder alternativ sowie in beliebigen Kombinationen realisierbar sind. Beispielsweise kann die zweite Kühlrohranordnung auf der Abgasseite und/oder auf der Kühlmittelseite eine größere Oberfläche aufweisen als die erste Kühlrohranordnung. Die zweite Kühlrohranordnung kann mehr Kühlrohre aufweisen als die erste Kühlrohranordnung. Die Kühlrohre der zweiten Kühlrohranordnung können für das Abgas kleiner Durchströmungsquerschnitte und/oder größere Durchströmungswiderstände besitzen. Die Kühlrohre der zweiten Kühlrohranordnung können aus einem anderen Material als die Kühlrohre der ersten Kühlrohranordnung bestehen und einen größeren Wärmeleitkoeffizienten besitzen. In den Kühlrohren der zweiten Kühlrohranordnung können Lamellen zur Verbesserung des Wärmeübergangs zwischen Abgas und Kühlrohr und/oder Turbulatoren angeordnet sein, welche den Strömungswiderstand und die Verweilzeit der Abgase im jeweiligen Kühlrohr erhöhen, sowie Turbulenzen verursachen, was jeweils zur Erhöhung des Wärmeübergangs zwischen Abgas und Kühlrohr beiträgt. Zweckmäßig können die Lamellen als Turbulatoren ausgestaltet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine mit Abgasrückführeinrichtung,
- Fig. 2 und 3: perspektivische Längsschnitte eines Abgasrückführkühlers bei verschiedenen Ausführungsformen,
- Fig. 4 und 5: perspektivische Längsschnitte eines anderen Abgasrückführkühlers mit Abgasventilanordnung bei unterschiedlichen Blickrichtungen und Schnittebenen.

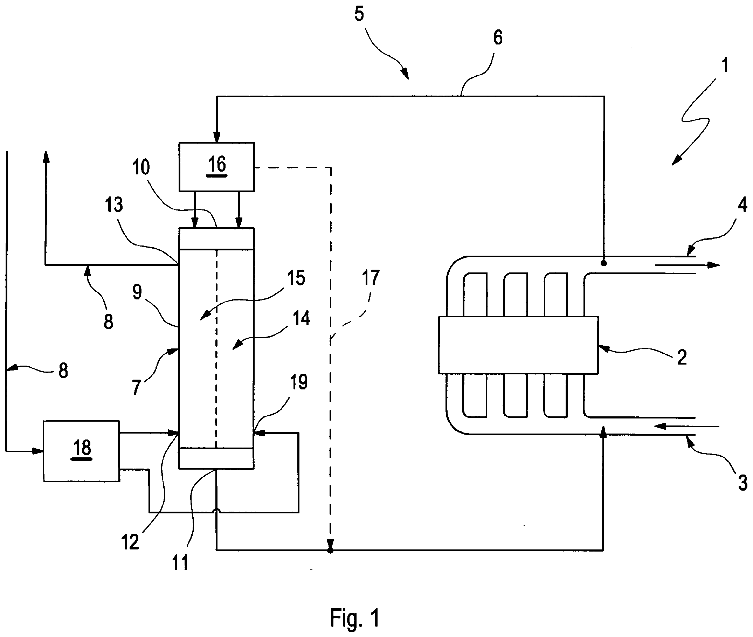

Entsprechend Fig. 1 umfasst eine Brennkraftmaschine 1, die in einem Kraftfahrzeug angeordnet sein kann, einen Motorblock 2 mit nicht gezeigten Zylindern, eine Frischgasanlage 3, die den Zylindern des Motorblocks 2 Frischgas zuführt, und eine Abgasanlage 4, die von den Zylindern des Motorblocks 2 Abgas abführt. Des weiteren ist die Brennkraftmaschine 1 mit einer Abgasrückführeinrichtung 5 ausgestattet, die im Folgenden mit AGR-Einrichtung 5 bezeichnet wird. Die AGR-Einrichtung 5 umfasst eine Abgasrückführleitung 6, die im Folgenden mit AGR-Leitung 6 bezeichnet wird. Die AGR-Leitung 6 dient zum externen Rückführen von Abgas aus der Abgasanlage 4 in die Frischgasanlage 3. Hierzu ist die AGR-Leitung 6 einerseits an die Abgasanlage 4 und andererseits an die Frischgasanlage 3 angeschlossen. Die AGR-Einrichtung 5 weist außerdem einen Abgasrückführkühler 7 auf, der im Folgenden als AGR-Kühler 7 bezeichnet wird. Der AGR-Kühler ist in der AGR-Leitung 6 angeordnet, so dass er vom Abgas durchströmbar ist. Der AGR-Kühler 7 ist an einen Kühlkreis 8 angeschlossen, der mit einem flüssigen Kühlmittel arbeitet. Vorzugsweise handelt es sich hierbei um denselben Kühlkreis 8, der bei der Brennkraftmaschine 1 zur Kühlung des Motorblocks 2 dient. Der AGR-Kühler 7 ermöglicht eine wärmeübertragende Kopplung zwischen Kühlmittel und Abgas und weist ein Kühlergehäuse 9 auf, das vom Kühlmittel durchströmbar ist und das zumindest einen Abgaseinlass 10, einen Abgasauslass 11, einen Kühlmitteleinlass 12 und einen Kühlmittelauslass 13 aufweist.

In seinem Kühlergehäuse 9 enthält der AGR-Kühler 7 zwei Kühlrohranordnungen, nämlich eine erste Kühlrohranordnung 14 und eine zweite Kühlrohranordnung 15. Jede Kühlrohranordnung 14, 15 verbindet im Gehäuse 9 den Abgaseinlass 10 mit dem Abgasauslass 11 und ermöglicht so die Durchströmung des AGR-Kühlers 7 mit Abgas. Gleichzeitig sind die beiden Kühlrohranordnungen 14, 15 mit dem durch das Kühlergehäuse 9 hindurchgeführten Kühlmittel wärmeübertragend gekoppelt. Die beiden Kühlrohranordnungen 14, 15 sind so aufeinander abgestimmt beziehungsweise so ausgestaltet, dass die zweite Kühlrohranordnung 15 bei gleichen Randbedingungen einen größeren Wärmestrom zwischen Abgas und Kühlmittel ermöglicht als die erste Kühlrohranordnung 14. Gleiche Randbedingungen bedeuten insbesondere gleiche Volumenströme von Abgas und Kühlmittel sowie gleiche Temperaturdifferenz zwischen Abgas und Kühlmittel.

Die AGR-Einrichtung 5 umfasst außerdem eine Abgasventilanordnung 16, die hier am Abgaseinlass 10 angeordnet ist. Grundsätzlich ist auch eine Ausführungsform denkbar, bei der sie am Abgasauslass 11 angeordnet ist. Die Abgasventilanordnung 16 ist so ausgestaltet, dass sie mehrere verschiedene Schaltstellungen ermöglicht. In einer ersten Schaltstellung führt sie das Abgas ausschließlich durch die erste Kühlrohranordnung 14. Die erste Schaltstellung wird von einer hier nicht dargestellten Steuerung der AGR-Einrichtung 5 zum Beispiel dann ausgewählt, wenn für das rückzuführende Abgas nur ein kleiner Kühlbedarf besteht. Insbesondere kann die erste Schaltstellung auch dann ausgewählt werden, wenn für das rückzuführende Abgas kein Kühlbedarf besteht, was beispielsweise während einer Warmlaufphase der Brennkraftmaschine 1 der Fall ist. Bei einer zweiten Schaltstellung führt die Abgasventilanordnung 16 das rückgeführte Abgas ausschließlich durch die zweite Kühlrohranordnung 15. Die zweite Schaltstellung wird beispielsweise dann ausgewählt, wenn ein deutlich höherer oder mittlerer Kühlbedarf für das Abgas besteht.

Vorzugsweise ermöglicht die Abgasventilanordnung 16 außerdem die Einstellung wenigstens einer dritten Schaltstellung, bei welcher die Abgasventilanordnung 16 das Abgas durch beide Kühlrohranordnungen 14, 15 leitet. Diese dritte Schaltstellung kann bei einem nochmals höheren oder großen Kühlbedarf im Abgas ausgewählt werden. Dabei ist es grundsätzlich möglich, die Abgasventilanordnung 16 so auszugestalten, dass innerhalb dieser dritten Schaltstellung grundsätzlich beliebige Zwischenstellungen einstellbar sind, wodurch die Aufteilung des rückgeführten Abgasstromes auf die beiden Kühlrohranordnungen 14, 15 zwischen 0% und 100% quasi beliebig einstellbar ist, insbesondere gestuft oder stufenlos.

Optional kann die AGR-Einrichtung 5 außerdem mit einem hier nur mit unterbrochener Linie angedeuteten Bypass 17 ausgestattet sein, der es ermöglicht, den AGR-Kühler 17 extern zu umgehen. Vorteilhaft ist hierzu die Abgasventilanordnung 16 zum Einstellen einer vierten Schaltstellung ausgebildet, in welcher sie die rückgeführten Abgase ausschließlich durch den Bypass 17 führt, was insbesondere bei fehlendem Kühlbedarf im Abgas sinnvoll ist. Zur Erzielung einer besonders kompakten Bauweise wird jedoch vorzugsweise auf diesen Bypass 17 verzichtet.

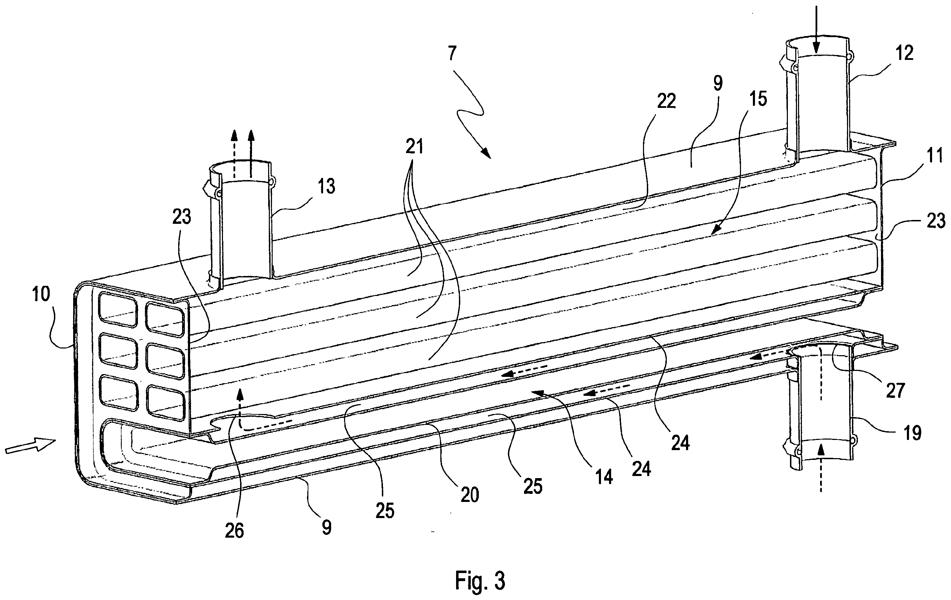

Die AGR-Einrichtung 5 beziehungsweise der Kühlkreis 8 kann mit einer Kühlmittelventilanordnung 18 ausgestattet sein, die es ermöglicht, den Kühlmittelstrom zwischen dem Kühlmitteleinlass 12 und einem ebenfalls an das Gehäuse 9 angeschlossenen Zusatzanschluss 19 umzuschalten oder aufzuteilen, insbesondere gestuft oder stufenlos zwischen 0% und 100%. Mit Hilfe des Zusatzanschlusses 19 kann im Kühlergehäuse 9 eine veränderte Kühlmittelströmung realisiert werden, die beispielsweise die Kühlleistung der ersten Kühlrohranordnung 14 verbessert. Auf eine mit dem Zusatzanschluss 19 versehene Ausführungsform wird weiter unten mit Bezug auf Fig. 3 näher eingegangen. Die Kühlmittelventilanordnung 18 kann statt wie hier im Vorlauf auch im Rücklauf des Kühlkreises 8 angeordnet sein, wobei sie dann die Kühlmittelströmung zwischen dem Kühlmittelauslass 13 und dem Zusatzanschluss 19 umschaltet oder aufteilt.

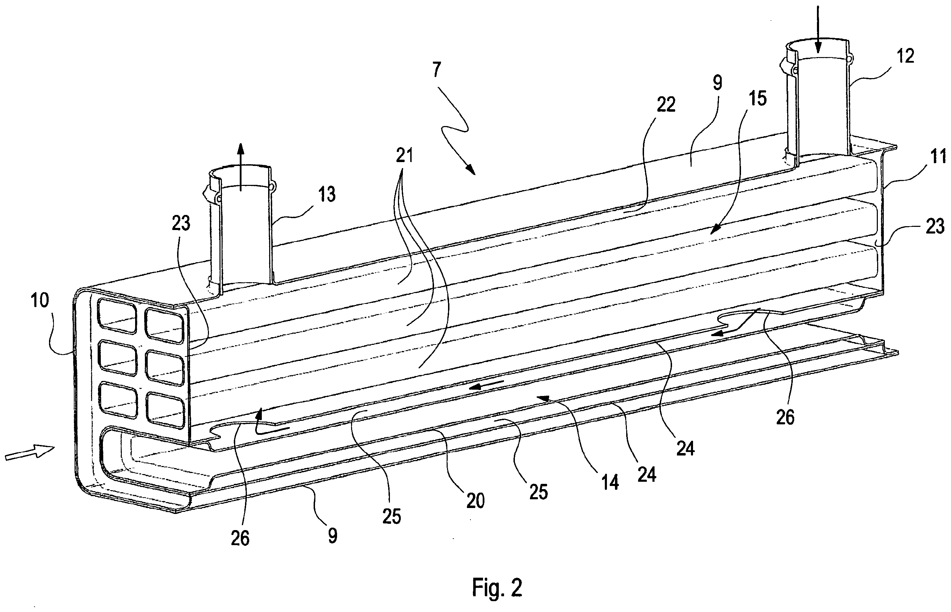

Entsprechend den Fig. 2 und 3 ist die erste Kühlrohranordnung 14 beispielsweise durch ein einziges Kühlrohr 20 gebildet, das den Abgaseinlass 10 mit dem Abgasauslass 11 verbindet. Im Unterschied dazu ist hier die zweite Kühlrohranordnung 15 durch mehrere Kühlrohre 21 gebildet, die ebenfalls den Abgaseinlass 10 mit Abgasauslass 11 verbinden. Im vorliegenden Fall sind sechs parallele Kühlrohre 21 in der zweiten Kühlrohranordnung 15 vorgesehen. Die Kühlrohre 20, 21 der beiden Kühlrohranordnungen 14, 15 erstrecken sich jeweils geradlinig und parallel zueinander.

Das Kühlergehäuse 9 umschließt einen Kühlraum 22, der bei den Ausführungsformen der Fig. 2 und 3 auch als Hauptkühlraum 22 bezeichnet wird. Der Kühlraum 22 ist im Bereich des Abgaseinlasses 10 und im Bereich des Abgasauslasses 11 jeweils durch einen Boden 23 begrenzt und dicht verschlossen. Die Kühlrohre 20, 21 der beiden Kühlrohranordnungen 14, 15 verlaufen innerhalb des Kühlraums 22 und durchsetzen die Böden 23.

Die Kühlrohre 21 der zweiten Kühlrohranordnung 15 besitzen sowohl abgasseitig als auch kühlmittelseitig insgesamt eine größere Oberfläche als das Kühlrohr 20 der ersten Kühlrohranordnung 14. Des weiteren sind sie jeweils mit kleineren Durchströmungsquerschnitten versehen als das Kühlrohr 20 der ersten Kühlrohranordnung 14. Hierdurch können die Kühlrohre 21 der zweiten Kühlrohranordnung 15 außerdem einen größeren Strömungswiderstand aufweisen als das Kühlrohr 20 der ersten Kühlrohranordnung 14. Optional kann außerdem vorgesehen sein, die Kühlrohre 21 der zweiten Kühlrohranordnung 15 aus einem anderen Material herzustellen als das Kühlrohr 20 der ersten Kühlrohranordnung 14, derart, dass sie einen größeren Wärmeleitkoeffizienten aufweisen. Beispielsweise sind die Kühlrohre 21 der zweiten Kühlrohranordnung 15 aus Aluminium oder Kupfer hergestellt, während das Kühlrohr 20 der ersten Kühlrohranordnung 14 aus Edelstahl besteht.

Bei den Ausführungsformen der Fig. 2 und 3 ist im Kühlergehäuse 9 eine Trennwand 24 angeordnet, und zwar so, dass sie das Kühlrohr 20 der ersten Kühlrohranordnung 14 in Umfangsrichtung, also quer zur Längsrichtung dieses Kühlrohrs 20 vollständig umschließt, und zwar beabstandet, so dass sich zwischen der Trennwand 24 und besagtem Kühlrohr 20 ein Zusatzkühlraum 25 ausbildet, der das Kühlrohr 20 der ersten Kühlrohranordnung 14 in Umfangsrichtung vollständig umschließt. Die Trennwand 24 trennt dabei den Zusatzkühlraum 25 innerhalb des Kühlergehäuses 9 vom übrigen Kühlraum 22 beziehungsweise Hauptkühlraum 22. Diese Trennung ist jedoch nicht vollständig, da die Trennwand 24 zumindest eine Öffnung 26 enthält, durch die der Zusatzkühlraum 25 mit dem Hauptkühlraum 22 kommuniziert. Auf diese Weise ist auch der Zusatzkühlraum 25 vom Kühlmittel durchströmbar. Das Kühlrohr 20 der ersten Kühlrohranordnung 14 erstreckt sich somit im Zusatzkühlraum 25, während sich die Kühlrohre 21 der zweiten Kühlrohranordnung 15 im Hauptkühlraum 22 erstrecken. Die Trennwand 24 bewirkt eine gezielte Drosselung der Umspülung des Kühlrohrs 20 in der ersten Kühlrohranordnung 14 im Vergleich zur Umspülung der Kühlrohre 21 der zweiten Kühlrohranordnung 15. Die Trennwand 24 bildet somit eine Maßnahme zur Realisierung einer reduzierten Kühlleistung für die erste Kühlrohranordnung 14.

Bei der hier gezeigten Ausführungsform erfolgt die Anordnung der Trennwand 24 und des davon umschlossenen Kühlrohrs 20 innerhalb des Kühlergehäuses 9 so, dass der Hauptkühlraum 22 auch die Trennwand 24 und somit den Zusatzkühlraum 25 in der Umfangsrichtung umschließt. Folglich ist die Trennwand 24 in Umfangsrichtung allseitig vom Kühlmittel umspült. Hierdurch wird eine gleichmäßige Kühlung innerhalb des Kühlrohrs 20 der ersten Kühlrohranordnung 14 verbessert. Bei einer anderen Ausführungsform kann die Trennwand 24 auch so im Kühlergehäuse 9 angeordnet sein, dass sie wie ein Zwischenboden den Zusatzkühlraum 25 vom Hauptkühlraum 22 trennt, wobei sie auch dann durch wenigstens eine Öffnung 26 eine Kommunikation zwischen den beiden Kühlräumen 22, 25 ermöglicht. Der Zusatzkühlraum 25 ist dann nicht innerhalb des Hauptkühlraums 22 angeordnet, sondern quasi parallel dazu.

Bei der in Fig. 2 gezeigten Ausführungsform enthält die Trennwand 24 zumindest zwei derartige Öffnungen 26, die im Hinblick auf die Durchströmung des Kühlergehäuses 9 mit Kühlmittel so angeordnet sind, dass sie wenigstens eine Einlassöffnung und zumindest eine Auslassöffnung für Kühlmittel bilden. Die Durchströmung des Zusatzkühlraums 25 ist durch Pfeile angedeutet.

Bei der in Fig. 3 dargestellten Ausführungsform weist die Trennwand 24 zusätzlich zu der wenigstens einen Öffnung 26 eine weitere Öffnung 27 auf, die an den weiter oben bereits mit Bezug auf Fig. 1 genannten Zusatzanschluss 19 angeschlossen ist. Der an den Kühlkreis 8 angeschlossene Zusatzanschluss 19 ist dabei durch das Kühlergehäuse 9 hindurch an den Zusatzkühlraum 25 angeschlossen. Dabei durchsetzt der Zusatzanschluss 19 den Hauptkühlraum 22 zumindest teilweise. Die mit Bezug auf Fig. 1 genannte Kühlmittelventilanordnung 18, die mit dem Zusatzanschluss 19 und zum Beispiel mit dem Kühlmitteleinlass 12 verbunden ist, kann nun so ausgestaltet sein, dass sie eine erste Schaltstellung ermöglicht, in welcher das Kühlmittel ausschließlich durch den Kühlmitteleinlass 12 einströmt und durch den Kühlmittelauslass 13 ausströmt, vergleiche die mit durchgezogenen Linien gezeichneten Pfeile. Des weiteren kann sie eine zweite Schaltstellung realisieren, in welcher das Kühlmittel entsprechend mit unterbrochener Linie gezeichneten Pfeilen ausschließlich durch den Zusatzanschluss 19 einströmt und durch den Kühlmittelauslass 13 ausströmt. Alternativ kann in der zweiten Schaltstellung die Strömung auch so erfolgen, dass das Kühlmittel nur durch den Kühlmitteleinlass 12 einströmt und durch den Zusatzanschluss 19 ausströmt. Des weiteren ist es grundsätzlich möglich, die Kühlmittelventilanordnung 18 auch so auszubilden, dass sie eine dritte Schaltstellung ermöglicht, in der das Kühlmittel durch den Kühlmitteleinlass 12 einströmt und sowohl durch den Kühlmittelauslass 13 als auch durch den Zusatzanschluss 19 ausströmt. Alternativ ist auch eine Beschaltung möglich, bei der das Kühlmittel in der dritten Schaltstellung durch den Kühlmitteleinlass 12 und durch den Zusatzanschluss 19 einströmt und durch den Kühlmittelauslass 13 ausströmt. Denkbar ist auch ein hier nicht gezeigter, den AGR-Kühler 7 intern oder extern umgehender Bypass für das Kühlmittel, wobei dann die Kühlmittelventilanordnung 18 in einer weiteren oder vierten Schaltstellung das Kühlmittel durch besagten Bypass leitet.

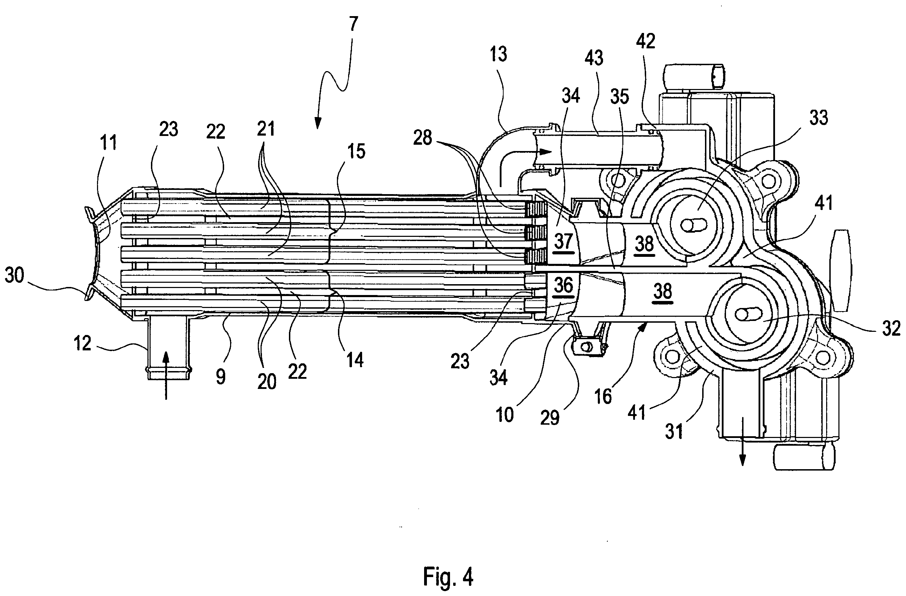

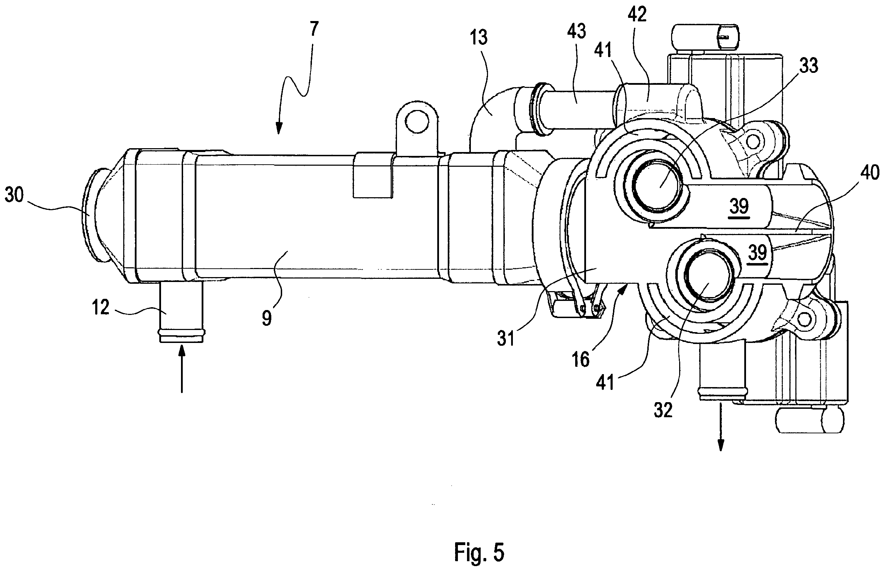

Bei der in den Fig. 4 und 5 gezeigten Ausführungsform sind die Kühlrohre 20, 21 der beiden Kühlrohrabschnitte 14, 15 als Gleichteile ausgestaltet. Weitere Merkmale gemäß der Erfindung wie z.B. die Trennwand und der Zusatzkühlraum sind hier nicht erneut beschrieben. Um die Leistungsfähigkeit der zweiten Kühlrohranordnung 15 gegenüber der ersten Kühlrohranordnung 14 zu verbessern, sind der zweiten Kühlrohranordnung 15 hier mehr Kühlrohre 21 zugeordnet als der ersten Kühlrohranordnung 14. Ohne Beschränkung der Allgemeinheit umfasst die erste Kühlrohranordnung 14 hier zwei Kühlrohre 20, während die zweite Kühlrohranordnung 15 drei Kühlrohre 21 aufweist. Des weiteren sind die Kühlrohre 21 der zweiten Kühlrohranordnung 15 in ihrem Inneren mit Lamellen und/oder Turbulatoren 28 ausgestattet, die in bekannter Weise zu einer extremen Verbesserung des Wärmeübergangs zwischen dem Abgas und den Kühlrohren 21 bewirken. Im Unterschied dazu enthalten die Kühlrohre 20 der ersten Kühlrohranordnung 14 vorzugsweise weder Lamellen noch Turbulatoren.

Die bei der Ausführungsform der Fig. 4 und 5 und die bei den Ausführungsformen der Fig. 2 und 3 gezeigten Maßnahmen zur Realisierung unterschiedlicher Wärmeströme in den beiden Kühlrohranordnungen 14, 15 sind beliebig miteinander kombinierbar.

Mit Bezug auf die Fig. 4 und 5 wird im Folgenden eine besondere Ausführungsform der Abgasventilanordnung 16 näher erläutert.

Entsprechend den Fig. 4 und 5 besitzt das Kühlergehäuse 9 einlassseitig einen Einlassflansch 29 der den Abgaseinlass 10 bildet und über den im vorliegenden Fall die Abgasventilanordnung 16 angeschlossen ist. Das Kühlergehäuse 9 verfügt außerdem über einen Auslassflansch 30, der den Abgasauslass 11 bildet und über den das Kühlergehäuse 9 an die AGR-Leitung 6 anschließbar ist. Bei einer alternativen Ausführungsform kann die Abgasventilanordnung 16 in entsprechender Weise auch auslassseitig angeordnet sein.

Die Abgasventilanordnung 16 umfasst ein Ventilgehäuse 31, das beispielsweise als Metallgussteil ausgestaltet ist. In diesem Ventilgehäuse 31 sind zwei Steuerventile, nämlich ein erstes Steuerventil 32 und ein zweites Steuerventil 33 angeordnet. Das erste Steuerventil 32 steuert den Abgasstrom durch die erste Kühlrohranordnung 14, während das zweite Steuerventil 33 den Abgasstrom durch die zweite Kühlrohranordnung 15 steuert. Die beiden Steuerventile 32, 33 sind zweckmäßig gleich aufgebaut (Gleichteile) und können zwischen einer maximal geöffneten Offenstellung und einer Schließstellung verstellt werden, wobei sie insbesondere eine oder mehrere Zwischenstellungen realisieren können, um ein gestuftes oder sogar stufenloses Umschalten zwischen der Schließstellung und der Offenstellung zu ermöglichen. Demnach handelt es sich bei den Steuerventilen 32, 33 nicht um Schaltventile, die ausschließlich zwischen einer Schließstellung und einer Offenstellung umschaltbar sind.

Entsprechend Fig. 4 weist das Kühlergehäuse 9 im Bereich des Abgaseinlasses 10 einen Abgaseinlassraum 34 auf, der durch den einlassseitigen Boden 23 vom Kühlmittel im Kühlraum 22 getrennt ist. Die Abgasventilanordnung 16 beziehungsweise deren Ventilgehäuse 31 ist mit einer Teilungswand 35 ausgestattet, die sich parallel zur Strömungsrichtung, also parallel zu den Kühlrohren 20, 21 erstreckt und sich dabei bis zum oder nahe an besagten Boden 23 erstreckt. Die Teilungswand 35 unterteilt den Abgaseinlassraum 34 in einen ersten Teilraum 36, der mit der ersten Kühlrohranordnung 14 kommuniziert, und einen zweiten Teilraum 37, der mit der zweiten Kühlrohranordnung 15 kommuniziert. Eine feste Anbindung der Teilungswand 35 an den Boden 23 ist nicht erforderlich. Gegebenenfalls auftretende Leckagen sind tolerierbar. Die Teilungswand 35 ragt in eine Lücke hinein, die zwischen den freien Enden der beiden benachbarten Rohre 20, 21 der beiden Kühlrohranordnungen 14, 15 gebildet ist.

Die Teilungswand 35 des Ventilgehäuses 31 erstreckt sich auch innerhalb des Ventilgehäuses 31, und zwar innerhalb eines Abgasaustritts 38, der von den beiden Steuerventilen 32, 33 weg und zum Abgaseinlass 10 des Kühlergehäuses 9 hin führt. Hierdurch wird innerhalb des gemeinsamen Ventilgehäuses 31 eine getrennte Strömungsführung für das Abgas von den Steuerventilen 32, 33 zum Abgaseinlass 10 und durch die bis zum einlassseitigen Boden 23 verlängerte Teilungswand 35 auch zu den beiden Kühlrohranordnungen 14, 15 realisiert.

Entsprechend Fig. 5 weist das Ventilgehäuse 31 außerdem einen Abgaseintritt 39 auf, der an die AGR-Leitung 6 anschließbar ist und der das Abgas den beiden Steuerventilen 32, 33 zuführt. Dabei kann auch im Abgaseintritt 39 eine Teilungswand 40 angeordnet sein, die innerhalb des Abgaseintritts 39 eine getrennte Strömungsführung für das Abgas bis zum jeweiligen Steuerventil 32, 33 ermöglicht. Durch die beiden Teilungswände 35, 40 sind im Ventilgehäuse 31 zwei vollständig voneinander getrennte Strömungspfade realisiert, von denen der eine mit dem ersten Steuerventil 32 und der andere separat mit dem zweiten Steuerventil 33 steuerbar ist.

Entsprechend den Fig. 4 und 5 weist das Ventilgehäuse 31 einen Kühlmantel 41 auf, der in den Kühlkreis 8 eingebunden ist. Hierzu sind ein am Ventilgehäuse 31 ausgebildeter Einlassstutzen 42 und der Kühlmittelauslass 13 des Kühlergehäuses 9 über ein Verbindungsstück 43 miteinander verbunden.

Sofern die Abgasventilanordnung 16 abströmseitig des AGR-Kühlers 7 angeordnet ist, kann eine derartige Flüssigkeitskühlung des Ventilgehäuses 31 entfallen.

## Patentansprüche

1. Abgasrückführkühler für eine Abgasrückführeinrichtung (5) einer Brennkraftmaschine (1), insbesondere in einem Kraftfahrzeug,
- wobei der Abgasrückführkühler (7) an eine Abgasrückführleitung (6) zum externen Rückführen von Abgas aus einer Abgasseite der Brennkraftmaschine (1) in eine Frischgasseite der Brennkraftmaschine (1) anschließbar ist,
- wobei der Abgasrückführkühler (7) an einen mit einem flüssigen Kühlmittel arbeitenden Kühlkreis (8) anschließbar ist,
- wobei der Abgasrückführkühler (7) ein vom Kühlmittel durchströmbares Kühlergehäuse (9) aufweist, das zumindest einen Abgaseinlass (10), einen Abgasauslass (11), einen Kühlmitteleinlass (12) und einen Kühlmittelauslass (13) aufweist,
- wobei der Abgasrückführkühler (7) in seinem Kühlergehäuse (9) eine erste Kühlrohranordnung (14) mit wenigstens einem den Abgaseinlass (10) mit dem Abgasauslass (11) verbindenden Kühlrohr (20) und eine zweite Kühlrohranordnung (15) mit wenigstens einem den Abgaseinlass (10) mit dem Abgasauslass (11) verbindenden Kühlrohr (21) enthält,
- wobei die Kühlrohranordnungen (14, 15) so ausgestaltet sind, dass die zweite Kühlrohranordnung (15) einen größeren Wärmestrom zwischen Abgas und Kühlmittel ermöglicht als die erste Kühlrohranordnung (14),
**dadurch gekennzeichnet,**
- **dass** im Kühlergehäuse (9) eine Trennwand (24) einen Hauptkühlraum (22), der vom Kühlmittel durchströmbar ist und in dem das eine Kühlrohr (21) oder die Kühlrohre (21) der zweiten Kühlrohranordnung (15) verläuft/verlaufen, von einem Zusatzkühlraum (25) trennt, in dem das eine Kühlrohr (20) oder die Kühlrohre (20) der ersten Kühlrohranordnung (14) verläuft/verlaufen, wobei die Trennwand (24) wenigstens eine Öffnung (26) enthält, durch die der Zusatzkühlraum (25) mit dem Hauptkühlraum (22) kommuniziert, oder
- **dass** die erste Kühlrohranordnung (14) oder das eine Kühlrohr (20) oder jedes Kühlrohr (20) der ersten Kühlrohranordnung (14) in Umfangsrichtung von einer Trennwand (24) umhüllt ist, derart, dass die Trennwand (24) einen das jeweilige Kühlrohr (20) oder die jeweiligen Kühlrohre (20) in Umfangsrichtung umhüllenden Zusatzkühlraum (25) in Umfangsrichtung umschließt, wobei die Trennwand (24) zumindest eine Öffnung (26) enthält, durch die der Zusatzkühlraum (25) mit einem Hauptkühlraum (22) kommuniziert, der vom Kühlergehäuse (9) umschlossen ist, der vom Kühlmittel durchströmbar ist und in dem das eine Kühlrohr (21) oder die Kühlrohre (21) der zweiten Kühlrohranordnung (15) verläuft/verlaufen.

2. Abgasrückführkühler nach Anspruch 1,
**dadurch gekennzeichnet**,
- dass eine Abgasventilanordnung (16) vorgesehen ist, die am Abgaseinlass (10) oder am Abgasauslass (11) angeordnet Z ist,
- wobei die Abgasventilanordnung (16) so ausgestaltet ist, dass das Abgas in einer ersten Schaltstellung der Abgasventilanordnung (16) nur durch die erste Kühlrohranordnung (14) und in einer zweiten Schaltstellung der Abgasventilanordnung (16) nur durch die zweite Kühlrohranordnung (15) strömen kann, und/oder
- wobei die Abgasventilanordnung (16) so ausgestaltet ist, dass das Abgas in einer dritten Schaltstellung der Abgasventilanordnung (16) durch beide Kühlrohranordnungen (14, 15) strömen kann, und/oder
- wobei die Abgasventilanordnung (16) so ausgestaltet ist, dass das Abgas in einer vierten Schaltstellung der Abgasventilanordnung (16) nur durch einen den Abgasrückführkühler (7) intern oder extern umgehenden Bypass (17) strömen kann, und/oder
- wobei die Abgasventilanordnung (16) so ausgestaltet ist, dass sie zwischen ihren einzelnen Schaltstellungen mit wenigstens einer Zwischenstufe oder stufenlos verstellbar ist.

3. Abgasrückführkühler nach Anspruch 1 oder 2, **gekennzeichnet durch** wenigstens eines der folgenden Merkmale:
- die zweite Kühlrohranordnung (15) weist abgasseitig und/oder kühlmittelseitig eine größere Oberfläche auf als die erste Kühlrohranordnung (14);
- die zweite Kühlrohranordnung (15) weist mehr Kühlrohre (21) auf als die erste Kühlrohranordnung (20);
- das jeweilige Kühlrohr (21) der zweiten Kühlrohranordnung (15) besitzt abgasseitig einen kleineren Durchströmungsquerschnitt als das jeweilige Kühlrohr (20) der ersten Kühlrohranordnung (14);
- das eine Kühlrohr (21) oder die Kühlrohre (21) der zweiten Kühlrohranordnung (15) besteht/bestehen aus einem Material, das einen größeren Wärmeleitkoeffizienten aufweist als das Material, aus dem das eine Kühlrohr (20) oder die Kühlrohre (20) der ersten Kühlrohranordnung (14) besteht/bestehen;
- das eine Kühlrohr (21) oder die Kühlrohre (21) der zweiten Kühlrohranordnung (15) weist/weisen abgasseitig einen größeren Durchströmungswiderstand auf als das eine Kühlrohr (20) oder die Kühlrohre (20) der ersten Kühlrohranordnung (14) .

4. Abgasrückführkühler nach einem der Ansprüche 1 bis 3,
**dadurch gekennzeichnet,**
- **dass** im einen Kühlrohr (21) oder in jedem Kühlrohr (21) der zweiten Kühlrohranordnung (15) Turbulatoren (28) und/oder Lamellen (28) angeordnet sind, und/oder
- **dass** in einem Kühlrohr (20) oder in jedem Kühlrohr (20) der ersten Kühlrohranordnung (14) keine Turbulatoren (28) und/oder Lamellen (29) angeordnet sind.

5. Abgasrückführkühler nach einem der Ansprüche 1 bis 4,
**dadurch gekennzeichnet,**
**dass** der Hauptkühlraum (22) die jeweilige Trennwand (24) und den jeweiligen Zusatzkühlraum (25) in Umfangsrichtung umschließt, so dass die den Zusatzkühlraum (25) umschließende Trennwand (24) in Umfangsrichtung allseitig vom Kühlmittel beaufschlagbar ist.

6. Abgasrückführkühler nach einem der Ansprüche 1 bis 5,
**dadurch gekennzeichnet,**
**dass** die Trennwand (24) zumindest zwei solche Öffnungen (26) enthält, die zumindest eine Einlassöffnung und zumindest eine Auslassöffnung bilden.

7. Abgasrückführkühler nach einem der Ansprüche 1 bis 5,
**dadurch gekennzeichnet,**
- **dass** die Trennwand (24) zusätzlich zumindest eine weitere Öffnung (27) aufweist, durch die ein an den Kühlkreis (8) angeschlossener Zusatzanschluss (19) durch das Kühlergehäuse (9) an den Zusatzkühlraum (25) angeschlossen ist.

8. Abgasrückführkühler nach Anspruch 7,
**dadurch gekennzeichnet,**
**dass** der Zusatzanschluss (19) zumindest einen Teil des Hauptkühlraums (22) durchsetzt.

9. Abgasrückführkühler nach Anspruch 7 oder 8,
**dadurch gekennzeichnet,**
**dass** eine Kühlmittelventilanordnung (18) vorgesehen ist, die mit dem Zusatzanschluss (19) und mit dem Kühlmitteleinlass (12) oder dem Kühlmittelauslass (13) verbunden und so ausgestaltet ist, dass das Kühlmittel in einer ersten Schaltstellung nur durch den Kühlmitteleinlass (12) einströmen kann und durch den Kühlmittelauslass (13) ausströmen kann und in einer zweiten Schaltstellung nur durch den Kühlmitteleinlass (12) einströmen kann und durch den Zusatzanschluss (19) ausströmen kann oder nur durch den Zusatzanschluss (19) einströmen kann und durch den Kühlmittelauslass (13) ausströmen kann.

10. Abgasrückführkühler nach Anspruch 9,
**dadurch gekennzeichnet,**
- **dass** die Kühlmittelventilanordnung (18) so ausgestaltet ist, dass das Kühlmittel in einer dritten Schaltstellung durch den Kühlmitteleinlass (12) einströmen kann und durch den Kühlmittelauslass (13) und durch den Zusatzanschluss (19) ausströmen kann oder durch den Kühlmitteleinlass (12) und durch den Zusatzanschluss (19) einströmen kann und durch den Kühlmittelauslass (13) ausströmen kann, und/oder
- **dass** die Kühlmittelventilanordnung (18) so ausgestaltet ist, dass das Kühlmittel in einer vierten Schaltstellung durch einen den Abgasrückführkühler (7) intern oder extern umgehenden Bypass strömen kann, und/oder
- **dass** die Kühlmittelventilanordnung (18) so ausgestaltet ist, dass sie zwischen ihren jeweiligen Schaltstufen über wenigstens eine Zwischenstufe gestuft oder stufenlos verstellbar ist.

11. Abgasrückführkühler nach einem der Ansprüche 1 bis 10,
**dadurch gekennzeichnet,**
**dass** die Kühlrohre (20, 21) der beiden Kühlrohranordnungen (14, 15) als Gleichteile ausgestaltet sind, wobei das Kühlrohr (21) oder die Kühlrohre (21) der zweiten Kühlrohranordnung (15) zusätzlich mit Lamellen (28) und/oder mit Turbulatoren (28) versehen ist/sind.

12. Abgasrückführkühler nach einem der Ansprüche 1 bis 11,
**dadurch gekennzeichnet,**
- **dass** das Kühlergehäuse (9) abgaseinlassseitig einen Boden (23) enthält, der von den Kühlrohren (20, 21) der beiden Kühlrohranordnungen (14, 15) durchsetzt ist und der einen Abgaseinlassraum (34) vom Kühlmittel trennt, wobei eine zur Aufteilung des Abgases auf die erste Kühlrohranordnung (14) und/oder zweite Kühlrohranordnung (15) vorgesehene Abgasventilanordnung (16) an den Abgaseinlass (10) angeschlossen ist, wobei die Abgasventilanordnung (16) eine Teilungswand (35) aufweist, die sich bis zum oder nahe an den Boden (23) erstreckt und im Abgaseinlassraum (34) einen mit der ersten Kühlrohranordnung (14) kommunizierenden ersten Teilraum (36) von einem mit der zweiten Kühlrohranordnung (15) kommunizierenden zweiten Teilraum (37) trennt, oder
- **dass** das Kühlergehäuse (9) abgasauslassseitig einen Boden (23) enthält, der von den Kühlrohren (20, 21) der beiden Kühlrohranordnungen (14, 15) durchsetzt ist und der einen Abgasauslassraum vom Kühlmittel trennt, wobei eine zur Aufteilung des Abgases auf die erste Kühlrohranordnung (14) und/oder auf die zweite Kühlrohranordnung (15) vorgesehene Abgasventilanordnung (16) an den Abgasauslass (11) angeschlossen ist, wobei die Abgasventilanordnung (16) eine Teilungswand aufweist, die sich bis zum oder nahe an den Boden (23) erstreckt und im Abgasauslassraum einen mit der ersten Kühlrohranordnung (14) kommunizierenden ersten Teilraum von einem mit der zweiten Kühlrohranordnung (15) kommunizierenden zweiten Teilraum trennt.

13. Abgasrückführkühler nach Anspruch 12,
**dadurch gekennzeichnet,**
**dass** im Kühlergehäuse (9) ein gemeinsamer Kühlraum (22) ausgebildet ist, der vom Kühlmittel durchströmbar ist, durch den die Kühlrohre (20, 21) beider Kühlrohranordnungen (14, 15) hindurchgeführt sind und der zum Abgaseinlass (10) sowie zum Abgasauslass (11) hin jeweils durch einen Boden (23) begrenzt ist.

14. Abgasrückführkühler zumindest nach Anspruch 2,
**dadurch gekennzeichnet,**
**dass** die Abgasventilanordnung (16) zwei Steuerventile (32, 33) aufweist, die jeweils in eine Schließstellung, in eine Offenstellung und in eine oder mehrere Zwischenstellungen gestuft oder stufenlos verstellbar sind, von denen ein erstes Steuerventil (32) den Abgasstrom durch die erste Kühlrohranordnung (14) steuert und von denen ein zweites Steuerventil (33) den Abgasstrom durch die zweite Kühlrohranordnung (15) steuert,
wobei wahlweise die beiden Steuerventile (32, 33) in einem gemeinsamen Ventilgehäuse (31) angeordnet sind, das einen zu beiden Steuerventilen (32, 33) hinführenden Abgaseintritt (39) und einen von beiden Steuerventilen (32, 33) wegführenden Abgasaustritt (38) aufweist, wobei im Abgaseintritt (39) und/oder im Abgasaustritt (38) eine Teilungswand (35, 40) angeordnet ist, die das Abgas im Ventilgehäuse (31) getrennt zu den Steuerventilen (32, 33) hinführt und/oder getrennt von den Steuerventilen (32, 33) wegführt, und wobei wahlweise das Ventilgehäuse (31) einen Kühlmantel (41) aufweist, der in den Kühlkreis (8) eingebunden ist.

15. Abgasrückführeinrichtung (5) einer Brennkraftmaschine (1), insbesondere in einem Kraftfahrzeug,
- mit einer Abgasrückführleitung (6) zum externen Rückführen von Abgas aus einer Abgasseite der Brennkraftmaschine (1) in eine Frischgasseite der Brennkraftmaschine (1), und
- mit einem in die Abgasrückführleitung (6) eingebauten Abgasrückführkühler (7) nach einem der Ansprüche 1 bis 14, der an einen mit einem flüssigen Kühlmittel arbeitenden Kühlkreis (8) anschließbar ist.

## Claims

1. Exhaust gas recirculation cooler for an exhaust gas recirculation device (5) of an internal combustion engine (1), in particular in a motor vehicle,
- wherein the exhaust gas recirculation cooler (7) is connectable to an exhaust gas recirculation line (6) for the external recirculation of exhaust gas from an exhaust-gas-side of the internal combustion engine (1) into a fresh-gas-side of the internal combustion engine (1),
- wherein the exhaust gas recirculation cooler (7) is connectable to a cooling circuit (8) working with a fluid cooling means,
- wherein the exhaust gas recirculation cooler (7) has a cooler housing (9) through which cooling means can flow through, which has at least one exhaust gas inlet (10), one exhaust gas outlet (11), one cooling means inlet (12) and one cooling means outlet (13),
- wherein the exhaust gas recirculation cooler (7) contains in its cooler housing (9) a first cooling pipe arrangement (14) having at least one cooling pipe (20) connecting the exhaust gas inlet (10) with the exhaust gas outlet (11) and a second cooling pipe arrangement (15) having at least one cooling pipe (21) connecting the exhaust gas inlet (10) with the exhaust gas outlet (11),
- wherein the cooling pipe arrangements (14, 15) are designed such that the second cooling pipe arrangement (15) facilitates a greater heat flow between exhaust gas and cooling means than the first cooling pipe arrangement (14),
**characterised in**
- **that** in the cooler housing (9) a partition wall (24) separates a main cooling chamber (22), through which cooling means can flow and in which the one cooling pipe (21) or the cooling pipes (21) of the second cooling pipe arrangement (15) runs/run, from an additional cooling chamber (25), in which the one cooling pipe (20) or the cooling pipes (20) of the first cooling pipe arrangement (14) runs/run, wherein the partition wall (24) contains at least one opening (26), through which the additional cooling chamber (25) communicates with the main cooling chamber (22), or
- **that** the first cooling pipe arrangement (14) or the one cooling pipe (20) or every cooling pipe (20) of the first cooling pipe arrangement (14) is surrounded in circumferential direction by a partition wall (24) in such a way that the partition wall (24) encloses in circumferential direction an additional cooling chamber (25) surrounding in circumferential direction the respective cooling pipe (20) or the respective cooling pipes (20), wherein the partition wall (24) contains at least one opening (26) through which the additional cooling chamber (25) communicates with one main cooling chamber (22), which is enclosed by the cooler housing (9), through which the cooling means can flow and in which the one cooling pipe (21) or the cooling pipes (21) of the second cooling pipe arrangement (15) runs/run.

2. Exhaust gas recirculation cooler according to claim 1,
**characterised in**
**that** an exhaust gas valve arrangement (16) is provided, which is disposed at the exhaust gas inlet (10) or at the exhaust gas outlet (11),
- wherein the exhaust gas valve arrangement (16) is designed such that in a first switch position of the exhaust gas valve arrangement (16) the exhaust gas can flow only through the first cooling pipe arrangement (14) and in a second switch position of the exhaust gas valve arrangement (16) only through the second cooling pipe arrangement (15), and/or
- wherein the exhaust gas valve arrangement (16) is designed such that in a third switch position of the exhaust gas valve arrangement (16) the exhaust gas can flow through both cooling pipe arrangements (14, 15), and/or
- wherein the exhaust gas valve arrangement (16) is designed such that in a fourth switch position of the exhaust gas valve arrangement (16) the exhaust gas can flow only through a bypass (17) bypassing internally or externally the exhaust gas recirculation cooler (7), and/or
- wherein the exhaust gas valve arrangement (16) is designed such that it is adjustable between its individual switch positions with at least one interim step or steplessly.

3. Exhaust gas recirculation cooler according to claim 1 or 2,
**characterised by** at least one of the following characteristics:
- the second cooling pipe arrangement (15) has on the exhaust-gas-side and/or on the cooling-means-side a larger surface than the first cooling pipe arrangement (14);
- the second cooling pipe arrangement (15) has more cooling pipes (21) than the first cooling pipe arrangement (20);
- the respective cooling pipe (21) of the second cooling pipe arrangement (15) has on the exhaust-gas-side a smaller through flow cross-section than the respective cooling pipe (20) of the first cooling pipe arrangement (14);
- the one cooling pipe (21) or the cooling pipes (21) of the second cooling pipe arrangement (15) is/are made of a material which has a greater thermal conducting coefficient than the material of which the one cooling pipe (20) or the cooling pipes (20) of the first cooling pipe arrangement (14) is/are made;
- the one cooling pipe (21) or the cooling pipes (21) of the second cooling pipe arrangement (15) has/have on the exhaust-gas-side a larger through flow resistance than the one cooling pipe (20) or the cooling pipes (20) of the first cooling pipe arrangement (14).

4. Exhaust gas recirculation cooler according to any of claims 1 to 3,
**characterised in**
- **that** in the one cooling pipe (21) or in each cooling pipe (21) of the second cooling pipe arrangement (15) are disposed turbulators (28) and/or lamellas (28), and/or
- **that** in one cooling pipe (20) or in each cooling pipe (20) of the first cooling pipe arrangement (14), no turbulators (28) and/or lamellas (29) are disposed.

5. Exhaust gas recirculation cooler according to any of claims 1 to 4,
**characterised in**
**that** the main cooling chamber (22) surrounds in circumferential direction the respective partition wall (24) and the respective additional cooling chamber (25) so that the partition wall (24) surrounding the additional cooling chamber (25) can be charged with cooling means from all sides in circumferential direction.

6. Exhaust gas recirculation cooler according to any of claims 1 to 5,
**characterised in**
**that** the partition wall (24) contains at least two such openings (26), which form at least one inlet opening and at least one outlet opening.

7. Exhaust gas recirculation cooler according to any of claims 1 to 5,
**characterised in**
- **that** the partition wall (24) has additionally at least one further opening (27) through which an additional connection (19) connected to the cooling circuit (8) is connected through the cooler housing (9) to the additional cooling chamber (25).

8. Exhaust gas recirculation cooler according to claim 7,
**characterised in**
**that** the additional connection (19) penetrates through at least one part of the main cooling chamber (22).

9. Exhaust gas recirculation cooler according to claim 7 or 8,
**characterised in**
**that** a cooling means valve arrangement (18) is provided which is connected with the additional connection (19) and with the cooling means inlet (12) or the cooling means outlet (13) and is designed such that the cooling means in a first switch position can flow in only through the cooling means inlet (12) and can flow out through the cooling means outlet (13) and in a second switch position can flow in only through the cooling means inlet (12) and can flow out through the additional connection (19) or can flow in only through the additional connection (19) and can flow out only through the cooling means outlet (13).

10. Exhaust gas recirculation cooler according to claim 9,
**characterised in**
- **that** the cooling means valve arrangement (18) is designed such that the cooling means in a third switch position can flow in through the cooling means inlet (12) and can flow out through the cooling means outlet (13) and through the additional connection (19) or can flow in through the cooling means inlet (12) and through the additional connection (19) and can flow out through the cooling means outlet (13), and/or
- **that** the cooling means valve arrangement (18) is designed such that the cooling means in a fourth switch position can flow through a bypass bypassing internally or externally the exhaust gas recirculation cooler (7), and/or
- **that** the cooling means valve arrangement (18) is designed such that it is adjustable between its individual switch positions with at least one interim step or steplessly.

11. Exhaust gas recirculation cooler according to any of claims 1 to 10,
**characterised in**
**that** the cooling pipes (20, 21) of the two cooling pipe arrangements (14, 15) are designed as common parts, wherein the cooling pipe (21) or the cooling pipes (21) of the second cooling pipe arrangement (15) is/are furnished additionally with lamellas (28) and/or with turbulators (28).

12. Exhaust gas recirculation cooler according to any of claims 1 to 11,
**characterised in**
- **that** the cooler housing (9) on the exhaust-gas-inlet-side contains a floor (23) which is penetrated by the cooling pipes (20, 21) of the two cooling pipe arrangements (14, 15) and which separates an exhaust gas inlet chamber (34) from the cooling means, wherein an exhaust gas valve arrangement (16), provided for dividing the exhaust gas between the first cooling pipe arrangement (14) and/or second cooling pipe arrangement (15), is connected to the exhaust gas inlet (10), wherein the exhaust gas valve arrangement (16) has a dividing wall (35) which extends up until or close to the floor (23) and in the exhaust gas inlet chamber (34) separates a first partial chamber (36) communicating with the first cooling pipe arrangement (14) from a second partial chamber (37) communicating with the second cooling pipe arrangement (15), or
- **that** the cooler housing (9) on the exhaust-gas-outlet-side contains a floor (23) which is penetrated by the cooling pipes (20, 21) of the two cooling pipe arrangements (14, 15) and which separates an exhaust gas outlet chamber from the cooling means, wherein an exhaust gas valve arrangement (16), provided for dividing the exhaust gas between the first cooling pipe arrangement (14) and/or the second cooling pipe arrangement (15), is connected to the exhaust gas outlet (11), wherein the exhaust gas valve arrangement (16) has a dividing wall which extends up until or close to the floor (23) and in the exhaust gas outlet chamber separates a first partial chamber communicating with the first cooling pipe arrangement (14) from a second partial chamber communicating with the second cooling pipe arrangement (15).

13. Exhaust gas recirculation cooler according to claim 12,
**characterised in**
**that** in the cooler housing (9) is formed a shared cooling chamber (22) through which cooling means can flow, through which the cooling pipes (20, 21) of both cooling pipe arrangements (14, 15) are guided and which is delimited to the exhaust gas inlet (10) and to the exhaust gas outlet (11) respectively by a floor (23).

14. Exhaust gas recirculation cooler at least according to claim 2,
**characterised in**
**that** the exhaust gas valve arrangement (16) has two control valves (32, 33) which are each stepped, or are steplessly adjustable, into a closing position, into an opening position and two in one or more interim positions, of which control valves a first control valve (32) controls the exhaust gas flow through the first cooling pipe arrangement (14) and of which a second control valve (33) controls the exhaust gas flow through the second cooling pipe arrangement (15),
wherein optionally
the two control valves (32, 33) are disposed in a shared valve housing (31) which has an exhaust gas entrance (39) leading to both control valves (32, 33) and an exhaust gas exit (38) leading away from both control valves (32, 33), wherein in the exhaust gas entrance (39) and/or in the exhaust gas exit (38) is disposed a dividing wall (35, 40) which leads the exhaust gas in the valve housing (31) in an isolated manner to the control valves (32, 33) and/or in an isolated manner from the control valves (32, 33),
and wherein optionally
the valve housing (31) has a cooling cladding (41) which is integrated into the cooling circuit (8).

15. Exhaust gas recirculation device (5) of an internal combustion engine (1), in particular in a motor vehicle,
- having an exhaust gas recirculation line (6) for the external recirculation of exhaust gas from an exhaust-gas-side of the internal combustion engine (1) into a fresh-gas-side of the internal combustion engine (1), and
- having, installed into the exhaust gas recirculation line (6), an exhaust gas recirculation cooler (7) according to any of claims 1 to 14, which can be connected to a cooling circuit (8) working with a fluid cooling means.

## Revendications

1. Refroidisseur de recyclage de gaz d'échappement d'un dispositif de recyclage de gaz d'échappement (5) d'un moteur à combustion interne (1), en particulier dans un véhicule à moteur,
- dans lequel le refroidisseur de recyclage de gaz d'échappement (7) peut être relié à une conduite de recyclage de gaz d'échappement (6) pour le recyclage externe des gaz d'échappement depuis un côté de gaz d'échappement du moteur à combustion interne (1) jusque dans un côté de gaz frais du moteur à combustion interne (1),
- dans lequel le refroidisseur de recyclage de gaz d'échappement (7) peut être relié à un circuit de refroidissement (8) fonctionnant avec un fluide de refroidissement,
- dans lequel le refroidisseur de recyclage de gaz d'échappement (7) comporte un carter de refroidisseur (9) à travers lequel peut passer un fluide de refroidissement qui comporte au moins une entrée de gaz d'échappement (10), une sortie de gaz d'échappement (11), une entrée de fluide de refroidissement (12) et une sortie de fluide de refroidissement (13),
- dans lequel le refroidisseur de recyclage de gaz d'échappement (7) comporte, dans son carter de refroidisseur (9), un premier ensemble de tubes de refroidissement (14) avec au moins un tube de refroidissement (20) reliant l'entrée de gaz d'échappement (10) et la sortie d'échappement (11), et un second ensemble de tubes de refroidissement (15) avec au moins un tube de refroidissement (21) reliant l'entrée de gaz d'échappement (10) et la sortie de gaz d'échappement (11),
- dans lequel les ensembles de tubes de refroidissement (14, 15) sont configurés de sorte que le second ensemble de tubes de refroidissement (15) permet un flux de chaleur plus important entre les gaz d'échappement et le fluide de refroidissement que le premier ensemble de tubes de refroidissement (14),
**caractérisé en ce que**
- dans le carter de refroidisseur (9), une paroi de séparation (24) sépare un espace de refroidissement principal (22), à travers lequel peut s'écouler le fluide de refroidissement et dans lequel s'étend/s'étendent le tube de refroidissement (21) ou les tubes de refroidissement (21), du second ensemble de tubes de refroidissement (15), d'un espace de refroidissement supplémentaire (25) dans lequel s'étend/s'étendent le tube de refroidissement (20) ou les tubes de refroidissement (20) du premier ensemble de tubes de refroidissement (14), dans lequel la paroi de séparation (24) comprend au moins une ouverture (26) via laquelle l'espace de refroidissement supplémentaire (25) communique avec l'espace de refroidissement principal (22), ou **en ce que**
- le premier ensemble de tubes de refroidissement (14) ou un tube de refroidissement (20) ou chaque tube de refroidissement (20) du premier ensemble de tubes de refroidissement (14) est entouré dans une direction circonférentielle d'une paroi de séparation (24), de sorte que la paroi de séparation (24) renferme dans une direction circonférentielle un tube de refroidissement (20) respectif ou les tubes de refroidissement (20) respectifs dans l'espace de refroidissement supplémentaire (25) entouré dans la direction circonférentielle, dans lequel la paroi de séparation (24) comporte au moins une ouverture (26) via laquelle l'espace de refroidissement supplémentaire (25) communique avec un espace de refroidissement principal (22), qui est délimitée par le carter de refroidisseur (9), à travers laquelle le fluide de refroidissement peut s'écouler, et dans laquelle s'étend/s'étendent le tube de refroidissement (21) ou les tubes de refroidissement (21) du second ensemble de tubes de refroidissement (15).

2. Refroidisseur de gaz d'échappement selon la revendication 1, **caractérisé en ce qu'**un dispositif de soupape d'échappement (16) est prévu, qui est agencé à l'entrée de gaz d'échappement (10) ou à la sortie de gaz d'échappement (11),
- dans lequel l'agencement de soupape d'échappement (16) est configuré pour que les gaz d'échappement puissent s'écouler dans une première position de commutation de l'ensemble de soupape d'échappement (16) uniquement à travers le premier ensemble de tubes de refroidissement (14) et dans une seconde position de commutation de l'ensemble de soupape d'échappement (16) uniquement à travers le second ensemble de tubes de refroidissement (15), et/ou
- dans lequel l'ensemble de soupape d'échappement (16) est configuré de sorte que les gaz d'échappement, dans une troisième position de commutation de l'ensemble de soupape d'échappement (16), peuvent s'écouler à travers les deux ensembles de tubes de refroidissement (14, 15), et/ou
- dans lequel l'ensemble de soupape d'échappement (16) est configuré de telle sorte que les gaz d'échappement, dans une quatrième position de commutation de l'ensemble de soupape d'échappement (16), ne peuvent s'écouler qu'à travers une dérivation (17) contournant le refroidisseur de recyclage de gaz d'échappement (7) intérieurement ou extérieurement, et/ou
- dans lequel l'ensemble de soupape d'échappement (16) est conçu de manière à pouvoir être réglé entre ses différentes positions de commutation avec au moins un stade intermédiaire ou en continu.

3. Refroidisseur de gaz d'échappement selon la revendication 1 ou 2, **caractérisé par** au moins l'une des caractéristiques suivantes :
- le second ensemble de tubes de refroidissement (15) présente une plus grande surface du côté des gaz d'échappement et/ou du côté du fluide de refroidissement que le premier ensemble de tubes de refroidissement (14) ;
- le second ensemble de tubes de refroidissement (15) comporte plus de tubes de refroidissement (21) que le premier ensemble de tubes de refroidissement (20) ;
- le tube de refroidissement respectif (21) du second ensemble de tubes de refroidissement (15) présente du côté des gaz d'échappement une section d'écoulement traversant inférieure à celle du tube de refroidissement respectif (20) du premier ensemble de tubes de refroidissement (14) ;
- le tube de refroidissement (21) ou les tubes de refroidissement (21) du second ensemble de tubes de refroidissement (15) est/sont constitué(s) d'un matériau qui présente un coefficient de conductivité thermique supérieur à celui du matériau dont est/sont constitué(s) le tube de refroidissement (20) ou les tubes de refroidissement (20) du premier ensemble de tubes de refroidissement (14) ;
- le tube de refroidissement (21) ou les tubes de refroidissement (21) du second ensemble de tubes de refroidissement (15) présentent une plus grande résistance à un écoulement traversant du côté des gaz d'échappement que le tube de refroidissement (20) ou les tubes de refroidissement (20) du premier ensemble de tubes de refroidissement (14).

4. Refroidisseur de gaz d'échappement selon l'une quelconque des revendications 1 à 3, caractérisé en que
- dans un tube de refroidissement (21) ou dans chaque tube de refroidissement (21) du second ensemble de tubes de refroidissement (15) sont agencés des turbulateurs (28) et/ou des lamelles (28), et/ou
- dans un tube de refroidissement (20) ou dans chaque tube de refroidissement (20) du premier ensemble de tubes de refroidissement (14) ne sont agencés aucun turbulateur (28) et/ou aucune lamelle (29).

5. Refroidisseur de gaz d'échappement selon l'une quelconque des revendications 1 à 4, **caractérisé en ce que** l'espace de refroidissement principal (22) renferme la paroi de séparation (24) respective et l'espace de refroidissement supplémentaire (25) respectif dans la direction circonférentielle, de sorte que la paroi de séparation (24) renfermant l'espace de refroidissement supplémentaire (25) peut être soumise de tous côtés dans la direction circonférentielle à du fluide de refroidissement.

6. Refroidisseur de gaz d'échappement selon l'une quelconque des revendications 1 à 5, **caractérisé en ce que** la paroi de séparation (24) comporte au moins deux telles ouvertures (26) qui forment au moins une ouverture d'entrée et au moins une ouverture de sortie.

7. Refroidisseur de gaz d'échappement selon l'une quelconque des revendications 1 à 5, **caractérisé en ce que**
- la paroi de séparation (24) comporte en outre au moins une ouverture supplémentaire (27) à travers laquelle une connexion supplémentaire (19) reliée au circuit de refroidissement (8) est reliée à l'espace de refroidissement supplémentaire (25) par le carter de refroidisseur (9).

8. Refroidisseur de gaz d'échappement selon la revendication 7, **caractérisé en ce que** la connexion supplémentaire (19) traverse au moins une partie de l'espace de refroidissement principal (22).

9. Refroidisseur de gaz d'échappement selon la revendication 7 ou 8, **caractérisé en ce qu'**un agencement de soupape de fluide de refroidissement (18) est prévu, qui est relié à la connexion supplémentaire (19) et à l'entrée de fluide de refroidissement (12) ou à la sortie de fluide de refroidissement (13), et qui est configuré de sorte que le fluide de refroidissement peut s'écouler en entrée dans une première position de commutation uniquement à travers l'entrée de fluide de refroidissement (12), et peut s'écouler en sortie à travers la sortie de fluide de refroidissement (13), et dans une deuxième position de commutation, peut s'écouler en entrée uniquement à travers l'entrée de liquide de refroidissement (12) et peut s'écouler en sortie à travers la connexion supplémentaire (19), ou peut s'écouler en entrée uniquement à travers la connexion supplémentaire (19) et peut s'écouler en sortie à travers la sortie de liquide de refroidissement (13).

10. Refroidisseur de gaz d'échappement selon la revendication 9, **caractérisé en ce que**
- l'agencement de soupape de refroidissement (18) est configuré de sorte que le fluide de refroidissement, dans une troisième position de commutation, peut s'écouler en entrée à travers l'entrée de fluide de refroidissement (12) et peut s'écouler en sortie à travers la sortie de fluide de refroidissement (13) et à travers la connexion supplémentaire (19) ou peut s'écouler en entrée à travers l'entrée de fluide de refroidissement (12) et à travers la connexion supplémentaire (19), et peut s'écouler en sortie à travers la sortie de fluide de refroidissement (13), et/ou
- l'agencement de soupape de fluide de refroidissement (18) est conçu de telle sorte que le fluide de refroidissement, dans une quatrième position de commutation, peut s'écouler à travers une dérivation interne ou externe contournant le refroidisseur de recyclage de gaz d'échappement (7), et/ou
- l'agencement de soupape de fluide refroidissement (18) est conçu de telle sorte qu'il peut être réglé entre ses différentes positions de commutation avec au moins un stade intermédiaire ou en continu.

11. Refroidisseur de gaz d'échappement selon l'une quelconque des revendications 1 à 10, **caractérisé en ce que** les tubes de refroidissement (20, 21) des deux ensembles de tubes de refroidissement (14, 15) sont conçus sous la forme de pièces identiques, dans lequel le tube de refroidissement (21) ou les tubes de refroidissement (21) du second ensemble de tubes de refroidissement (15) est/sont prévus avec des lamelles (28) et/ou des turbulateurs (28).

12. Refroidisseur de gaz d'échappement selon l'une quelconque des revendications 1 à 11, **caractérisé en ce que**
- le carter de refroidisseur (9) comporte un fond (23) du côté d'entrée de gaz d'échappement, qui est traversé par les tubes de refroidissement (20, 21) des deux ensembles de tubes de refroidissement (14, 15) et qui sépare un espace d'entrée de d'échappement (34) du fluide de refroidissement, dans lequel un agencement de soupape d'échappement (16) prévu pour répartir les gaz d'échappement sur le premier ensemble de tubes de refroidissement (14) et/ou le second ensemble de tubes de refroidissement (15) est relié à l'entrée de gaz d'échappement (10), dans lequel l'agencement de soupape d'échappement (16) présente une paroi de séparation (35) qui s'étend jusqu'au plancher (23), ou à proximité de celui-ci, et sépare, dans l'espace d'entrée de gaz d'échappement (34), un premier sous-espace (36) communiquant avec le premier ensemble de tubes de refroidissement (14) et un second sous-espace (37) communiquant avec le second ensemble de tubes de refroidissement (15),
- le carter de refroidisseur (9), du côté de sortie de gaz d'échappement, comporte un fond (23) qui est traversé par les tubes de refroidissement (20, 21) des deux ensembles de tubes de refroidissement (14, 15), et qui sépare un espace de sortie de gaz d'échappement du fluide de refroidissement, dans lequel un agencement de soupape d'échappement (16) prévu pour répartir les gaz d'échappement sur le premier ensemble de tubes de refroidissement (14) et/ou le second ensemble de tubes de refroidissement (15) est relié à la sortie de gaz d'échappement (11), dans lequel l'agencement de soupape d'échappement (16) présente une paroi de séparation qui s'étend jusqu'au plancher (23), ou à proximité de celui-ci, et sépare, dans l'espace de sortie de gaz d'échappement, un premier sous-espace communiquant avec le premier ensemble de tubes de refroidissement (14) et un second sous-espace communiquant avec le second ensemble de tubes de refroidissement (15).

13. Refroidisseur de gaz d'échappement selon la revendication 12, **caractérisé en ce qu'**un espace de refroidissement commun (22) est formé dans le carter de refroidisseur (9), via lequel le fluide de refroidissement peut s'écouler de manière traversante, à travers lequel sont guidés les tubes de refroidissement (20, 21) des deux agencements de tube de refroidissement (14, 15), et qui est délimité à chaque fois par un fond (23) par rapport à l'entrée de gaz d'échappement (10) et la sortie de gaz d'échappement (11).

14. Refroidisseur de gaz d'échappement au moins selon la revendication 2, **caractérisé en ce que** l'ensemble de soupape d'échappement (16) comporte deux soupapes de commande (32, 33) qui sont peuvent être réglées chacune dans une position fermée, dans une position ouverte et dans une ou plusieurs positions intermédiaires, par étapes ou en continu, dont une première soupape de commande (32) commande l'écoulement de gaz d'échappement à travers le premier ensemble de tubes de refroidissement (14) et dont une seconde soupape de commande (33) commande l'écoulement de gaz d'échappement à travers le second ensemble de tubes de refroidissement (15), dans lequel éventuellement les deux soupapes de commande (32, 33) sont agencées dans un carter de soupapes commun (31) qui comporte une entrée de gaz d'échappement (39) guidant en entrée vers les deux soupapes de commande (32, 33) et une sortie de gaz d'échappement (38) guidant en sortie loin des deux soupapes de commande (32, 33), dans lequel une paroi de séparation (35, 40) est agencée dans l'entrée de gaz d'échappement (39) et/ou dans la sortie de gaz d'échappement (38) qui, dans le carter de soupapes (31), sépare les gaz d'échappement pour les guider en entrée vers le soupapes de commande (32, 33) et/ou les guider en sortie loin des soupapes de commande (32, 33), et facultativement dans lequel le carter de soupapes (31) comporte une enveloppe de refroidissement (41), qui est intégrée dans le circuit de refroidissement (8).

15. Dispositif de recyclage de gaz d'échappement (5) d'un moteur à combustion interne (1), en particulier dans un véhicule à moteur,
- avec une conduite de recyclage de gaz d'échappement (6) pour le recyclage externe de gaz d'échappement depuis un côté de gaz d'échappement du moteur à combustion interne (1) vers un côté de gaz frais du moteur à combustion interne (1), et
- avec un refroidisseur de recyclage de gaz d'échappement (7) intégré dans la conduite de recyclage de gaz d'échappement (6), selon l'une des revendications 1 à 14, qui peut être relié à un circuit de refroidissement (8) fonctionnant avec un fluide de refroidissement.
